# EUROPEAN PATENT APPLICATION

(11) **EP 2 866 384 A1**
(43) Date of publication of application: **29.04.2015**
(21) Application number: 13190154.8
(22) Date of filing: 24.10.2013
(51) Int. Cl.: H04L 12/28

(54) **Data communication system and corresponding methods**

(71) Applicant: Wiotech AB, 602 21 Norrköping (SE)
(72) Inventor: Gong, Shaofang, 603 66 Norrköping (SE); Huynh, Allan, 602 20 Norrköping (SE); Zhang, Jingcheng, 605 60 Svärtinge (SE); Huss, Patrik, 602 16 Norrköping (SE); Ye, Qinzhong, 603 75 Norrköping (SE)
(74) Representative: Bokinge, Ole

(57) **Abstract**

The present document discloses a data communication system (1). The system comprises an apparatus (51, 52, 53, 54, 55, 56) that is to be controlled and/or monitored; a user terminal (10, 11) that is configured provide control data for the apparatus and/or to receive monitoring data from the apparatus via a data network (20); an IOT device (41, 42, 43, 44, 45, 46), which is configured to monitor and/or control the apparatus; and a data communication manager (31, 32), which is arranged on an apparatus side of the data network and comprises: a processing unit (62); a memory unit (66); a first communication unit (64), configured to communicate with the user terminal over a data network by means of an application protocol (60) together with a network protocol, such as the Internet; and a second communication unit (65), configured to communicate wirelessly with the IOT device by means of a wireless protocol (61), wherein the memory unit is configured to provide: a virtual IOT device (41 a, 42a, 43a, 44a, 45a, 46a) associating a unique ID of the IOT device with a database comprising data in the form of at least one of control data (41 a2) for the apparatus, monitoring data (41 a3) generated at the apparatus and position data (41 a4) of the apparatus and optionally time stamp data (41 a5) for said data, and a data protocol database (67) comprising information for importing data from and/or exporting data to at least the application protocol and the wireless protocol; wherein the processing unit is configured to: extract data received via one of the application protocol and the wireless protocol, store the extracted data in the database of the virtual IOT device, export the stored data to the other of the application protocol and the wireless protocol; forward the exported data from the database to the IOT device or to the user terminal; and introduce a delay between storing the data and forwarding the data to the IOT device or to the user terminal, as the case may be.

## Description

### Technical background

The present disclosure relates to a method, device and system for data communication, and in particular for communication in an "internet-of-things" setting.

### Background

There is a growing interest for providing remote monitoring and/or control of various devices using the Internet. For example, it is desirable to be able to remotely monitor parameters, such as temperature, humidity, electricity consumption or water consumption in buildings. It is also desirable to be able to remotely monitor the presence or whereabouts of people and things in a building. It is also desirable to be able to remotely control various parameters, such as lighting, heating, locking, etc. in buildings. Finally, there can be foreseen a desire to be able to remotely receive alarms, e.g. from malfunctioning household appliances or bad health condition of a person or the like.

In order to meet desires such as the ones outlined above, it is necessary to provide connectivity between the device to be monitored and/or controlled and a remote user terminal, such as a computer, a smartphone, a tablet pc, or the like.

To this end, there have been provided sensor and/or actuator interface units, which comprise a sensor and/or actuator, as the case may be and a communication unit for sending/receiving sensor/actuator data. Special protocols have been devised for such interface units to enable communication with the user terminal.

However, in many applications it is desirable to provide wireless communication, e.g. in order to enable or facilitate installation of the interface unit. Similarly, and also in order to enable or facilitate installation, it is often desirable to operate the interface units on battery rather than via a mains supply. Hence, such interface units may be seen as "resource constrained", in the sense that they may be capable only of low speed data communication and/or have limited battery capacity.

Hence, there is a need for a communication method which provides the desired remote connectivity and which at the same time reduces the maintenance needs of the interface devices.

### Summary

It is an object to provide an improved or alternative data communication system and method, which wholly or partially meets the above-mentioned needs.

The invention is defined by the appended independent claims. Embodiments are set forth in the appended dependent claims and in the following description and in the drawings.

According to a first aspect there is provided a data communication system comprising an apparatus that is to be controlled and/or monitored, a user terminal that is configured provide control data for the apparatus and/or to receive monitoring data from the apparatus via a data network, an IOT device, which is configured to monitor and/or control the apparatus and a data communication manager, which is arranged on an apparatus side of the data network. The data communication manager comprises a processing unit a memory unit a first communication unit, configured to communicate with the user terminal over a data network by means of an application protocol together with a network protocol, such as the Internet and a second communication unit, configured to communicate wirelessly with the IOT device by means of a wireless protocol. The memory unit is configured to provide a virtual IOT device associating a unique ID of the IOT device with a database comprising data in the form of at least one of control data for the apparatus, monitoring data generated at the apparatus and position data of the apparatus and optionally time stamp data for said data, and a data protocol database comprising information for importing data from and/or exporting data to at least the application protocol and the wireless protocol. The processing unit is configured to extract data received via one of the application protocol and the wireless protocol, store the extracted data in the database of the virtual IOT device, export the stored data to the other of the application protocol and the wireless protcol forward the exported data from the database to the IOT device or to the user terminal and introduce a delay between storing the data and forwarding the data to the IOT device or to the user terminal, as the case may be.

An apparatus may be any device, machine or thing which is to be controlled or monitored. It may be a sensor, relay, a utility meter, a heating or ventilation apparatus, washing machine or a refrigerator.

An IOT device is a device that provides an interface between the "thing", i.e. the apparatus that is to be monitored and/or controlled, and a data network. The IOT device may be connected to, or integrated with the apparatus.

A data communication manager may be understood as a unit which may be able to effectively translate data from the first application protocol to the second protocol and/or from the second to the first application protocol, store and process data, and impose network security measures such as encryption and authentication.

A virtual IOT device is defined as a representation of an existing IOT device, in that it is able to receive and store control data intended for the IOT device and to receive and store monitoring data received from the IOT device, such that from a user terminal, it will appear as if communication takes place directly with the IOT device and such that, from the IOT device, it will appear as if communication takes place directly with the user terminal. However, the actual communication between the user terminal and the IOT device is delayed.

The use of at least one database for each IOT device may be advantageous since representation of a plurality of IOT devices in one single database may require higher computational capacity of the data communication manager. Also more than one database for each IOT device may be used for example if the device has several functions, e.g. temperature control/monitoring and positioning of the IOT device.

The virtual IOT device may store data on a format which is independent of the application and wireless protocols supported by the data communication manager.

The unique ID may be an identification number permanently associated with the particular IOT device. Alternatively, it may be a unique number which is assigned to the IOT device once it is used in its system. For example, the ID be, or form part of, an address of the IOT device. As an example the unique ID may be an IPv6 or similar type address.

The wireless protocol may be different from the application protocol.

The data protocol database may comprise information relating to two or more application protocols and two or more wireless protocols. The number of protocols supported by the database may be dynamic, such that the database can be selectively expanded as need arises for supporting further protocols of either application or wireless type.

By introducing a delay, the IOT device does not have to listen/be awake all the time. Thereby energy may be saved and hence the time between maintenance (such as battery replacement) or replacement of the IOT device may be increased.
With the system as disclosed above, it is possible to provide any application protocol to communicate with any IOT device, including resource constrained IOT devices, which provides maximum flexibility in enabling the Internet on things.
The elay may be selected from a group consisting of a predetermined time period, a demand received from the user terminal, a demand received from the IOT device, and an amount of data accumulated in the virtual IOT device. The IOT device may comprise a processing unit, a wireless communication unit, optionally a memory unit, and at least one of a sensor input and/or a control output.
The IOT device may comprise a power supply unit consisting of at least one battery arranged for supplying power to the IOT device.
The IOT device may be integrated with the apparatus.
The data network may be a wide area network, such as the Internet.
The IOT device may have less than 5 % computational capacity as compared to the data communication manager, preferably less than 3 % computational capacity as compared to the data communication manager, more preferably less than 1 % of the computational capacity as compared to the data communication manager.
The application protocol may be a building automation and control system protocol, such as M-bus, Modbus, BACnet or HART, a positioning protocol or a health care protocol.
The wireless protocol may be a protocol for wireless communication, such as ZigBee, 6LoWPAN, wireless M-bus, wireless HART,Bluetooth or any other proprietary protocol.
The IOT device may be configured to operate at least partially in a low power mode during the delay.

In the low power mode, for example the communication parts of the IOT device may be wholly or partially shut down so as to minimize power consumption and/or the processing parts may be wholly or partially shut down to minimize power consumption.
The data protocol database comprises translation information relating to at least two different application protocols and/or at least two different wireless protocols.

According to a second aspect, there is provided a method of data communication between a user terminal and an IOT device configured to monitor and/or control an apparatus. The method comprises providing a data communication manager on an apparatus side of a data network, providing a virtual IOT device in the data communication manager, the virtual IOT device associating a unique ID of the IOT device with a database comprising data in the form of at least one of control data for the apparatus, monitoring data generated at the apparatus and position data of the apparatus and optionally time stamp data for said data, communicating via the data network with the user terminal via an application protocol together with a network protocol, such as the Internet, whereby the ID and control data is received from the user terminal, identifying the first application protocol, importing the control data from the application protocol, storing the control data in the database of the virtual IOT device, and communicating wirelessly with the IOT device via the wireless protocol, whereby the control data is transmitted from the virtual IOT device to the IOT device. In the method, a delay is introduced between storing the control data and communicating wirelessly with the IOT device.

According to a third aspect, there is provided a method of data communication between a user terminal and an IOT device configured to monitor and/or control an apparatus. The method comprises providing a data communication manager on an apparatus side of a data network, providing a virtual IOT device in the data communication manager, the virtual IOT device associating a unique ID of the IOT device with a database comprising data in the form of at least one of control data for the apparatus, monitoring data generated at the apparatus and position data of the apparatus and optionally time stamp data for said data, communicating wirelessly with the IOT device via a wireless protocol, whereby monitoring data and/or position data is received from the IOT device, identifying the IOT device based on the ID of the IOT device, importing the monitoring data and/or position data from the wireless protocol, storing the monitoring data and/or position data in the database of the virtual IOT device associated with the IOT device, exporting the monitoring data and/or position data stored in the database to an application protocol associated with a user terminal, and communicating via the data network with the user terminal via the application protocol together with a network protocol, such as the Internet, whereby the monitoring data and/or position data is transmitted from the virtual IOT device to the user terminal, In the method, a delay is introduced between storing monitoring data and/or position data and communicating with the user terminal.

The system may use mesh-technology in order to provide long range and high reliability of the system.

### Brief description of the drawings

Fig. 1 is a schematic drawing of the data communication system.
Fig. 2 is a schematic drawing of the data communication system with focus on the data communication manager.
Fig. 3 is a flow chart showing how to monitor data by the data communication method.
Fig. 4 is a flow chart showing how to control data by the data communication method.

### Description of embodiments

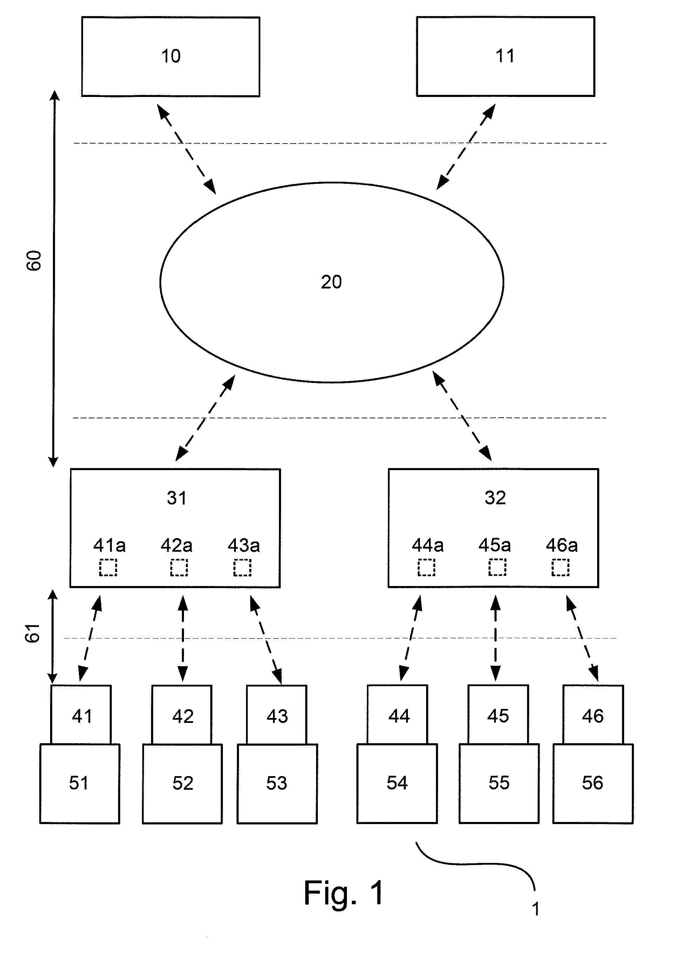

Fig. 1 illustrates a data communication system 1 with one or a plurality of user terminals 10, 11 which communicates with one or a plurality of remote IOT devices 41, 42, 43, 44, 45, 46 which are connected to, or integrated with, a plurality of apparatuses 51, 52, 53, 54, 55, 56.

The IOT device may be a resource-constrained device, i.e. battery-operated, with a low computational capacity, e.g. a device without microprocessor.

For example, the IOT device may be a network card such as an USB device, connected to, or integrated with, the apparatus to be monitored and/or controlled.

The IOT device may comprise a communication unit for sending and receiving data, an apparatus interface, an A/D and D/A converter, and a battery.

The apparatus connected to or integrated with the IOT device may be a sensor for temperature, CO₂ smoke or light, meter for water or electricity consumption, heat exchanger, lamp, or any type of household appliance such as a washing machine. Other examples of uses of IOT devices may be controlling of lighting, heating, locking etc. in buildings. The apparatus may also be a sensing device connected to an animal or a human.

Each user terminal may communicate with one or a plurality of data communication managers 31, 32 via a data network 20 using a network protocol together with an application protocol 60, such as M-bus, Modbus, BACnet, HART etc.

The data network may be a wide area network, such as the Internet, or a local area network, such as a home network, mobile network or WiFi.

A data communication manager may be a programmable device such as a computer with or without a display, an embedded microcontroller with memory, or any other device having the same functionalities. Furthermore, the data communication manager may be integrated with a gateway, such as a WiFi access node.

The data communication manager may have specific software and/or hardware for communication with the user terminal(s) and the remote IOT devices/apparatuses.

The data communication manager and the IOT device(s) may communicate via a wireless protocol 61 which is different from the application protocol used for communication between the data communication manager and user terminal(s).

The data communication manager and the corresponding IOT device(s) may be located within the same building or within the same building area, e.g. a hospital or university campus.

The data communication manager and the user terminal may be located within the same building or part of the building or within a building area or at remote geographic distance from each other.

Examples of wireless protocols for communication between the data communication manager and the IOT device(s) are ZigBee, 6LoWPAN, wireless M-bus, wireless HART, Bluetooth or any other proprietary protocol. The data communication manager effectively translates between the application and wireless protocol.

Each IOT device may be represented as a virtual IOT device 41a, 42a, 43a, 44a, 45a, 46a in the data communication manager 31, 32.

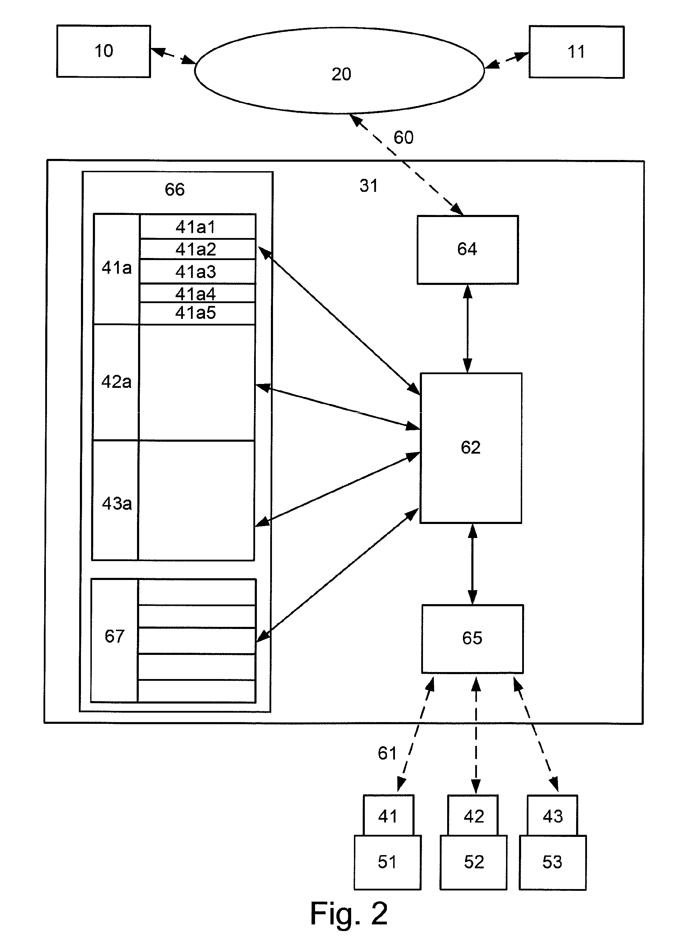

Fig. 2 illustrates the communication system with focus on the data communication manager 31.

The data communication manager comprises communication unit 64 for communication with the user terminals 10, 11 and a communication unit 65 for communication with the IOT devices/apparatuses.

The data communication manager may have a processing unit 62 for controlling the operations of the data communication manager, such as importing and/or exporting data between application and wireless protocols and applying security measures, such as encryption/decryption and/or access control measures.

Furthermore the data communication manager may have a memory unit 66 providing one or a plurality of virtual IOT devices 41a, 42a, 43a. Each virtual IOT device may be represented as at least one database and this database may comprise information about the unique ID of the IOT device 41a1, e.g. an IPv6 address, control data for the apparatus 41a2, monitoring data generated at the apparatus 41a3, position data of the apparatus 41a4, and optionally time stamp data for the monitoring and/or control data 41a5.

The memory unit also provides a protocol database 67 with information relating to a number of application protocols and/or a number of wireless protocols. The information in the database may be such as to enable import/export from/to various protocol types, and optionally also direct translation between various protocols.

Upon receiving data from a user terminal or an IOT device, the processing unit identifies the IOT device as well as information about which application protocol and wireless protocol that is used by the unique ID. When identified, the processing unit extracts the data and stores the data in the corresponding virtual IOT device in the memory unit.

The data may then be extracted by the processing unit, forwarded to the first or second communication unit 64, 65 and transmitted to the corresponding IOT device or to an user terminal e.g. upon request or upon pre-determined time intervals.

The monitoring, control and position data is stored in the corresponding virtual IOT device without any information about the protocols used.

Different IOT devices connected to the same data communication manager may use different wireless and/or application protocols.

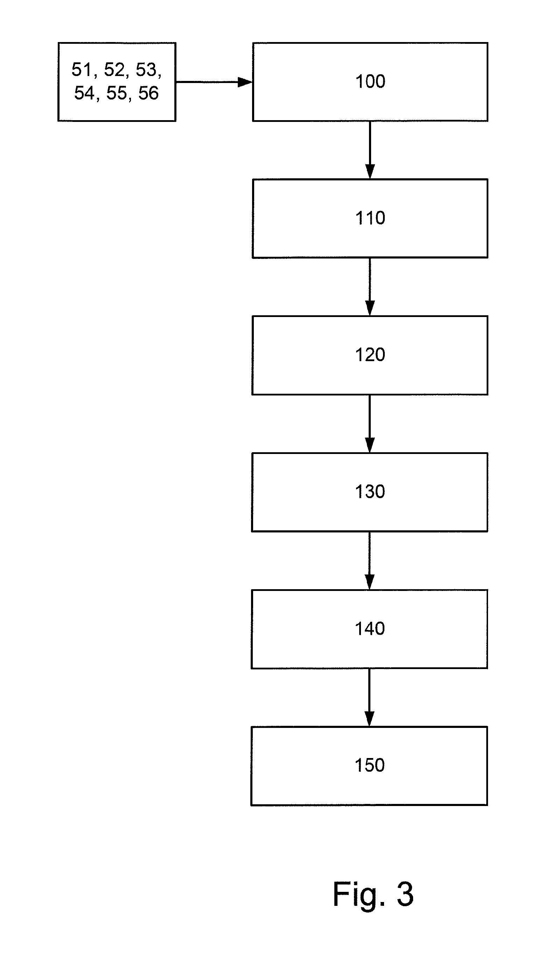

Fig. 3 illustrates monitoring of an apparatus by the data communication method.

An apparatus 51, 52, 53, 54, 55, 56 transmits 100 monitoring data to an IOT device.

The monitoring data may be sent continuously or upon predetermined time intervals, when a predetermined threshold is reached, upon demand from the user or upon demand from the IOT device.

If for example the monitoring data is sent only upon demand from the IOT device, upon demand from the user device or upon predetermined intervals, the IOT device may be operated in a low power mode while no data transmission is taking place.

The monitoring data may be stored 110 in a memory unit of the IOT device. The monitoring data may be stored a predetermined time, until the monitoring data is demanded by the user to or until a predetermined amount of data is accumulated in the IOT device.

The memory unit may be a volatile or non-volatile memory.

The monitoring data may be sent 120 to a data communication manager via a wireless protocol as described in Fig. 1 and Fig. 2.

The monitoring data may be sent directly after received by the IOT device or upon demand from the user or upon predetermined time intervals.

The monitoring data may be stored 130 in a virtual IOT device corresponding to the real IOT device in a memory unit of the communication manager.

The memory unit may be a volatile or non-volatile memory.

The monitoring data is sent 140 to the user terminal.

The monitoring data may be sent continuously, upon demand from the user, upon demand from the IOT device, when a predetermined threshold value is reached, or upon predetermined time intervals.

The monitoring data is presented 150 to the user.

The monitoring data may be presented as e.g. a diagram, table, as a single value etc.

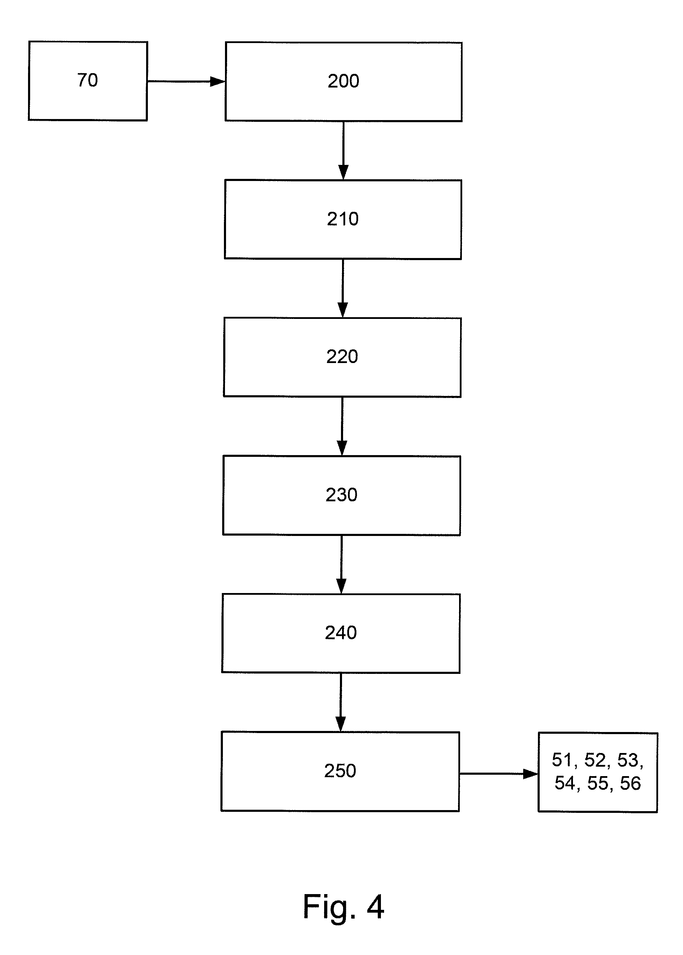

Fig. 4 illustrates controlling of an apparatus by the data communication method.

A user 70 gives an instruction 200 via a user terminal to control a remote apparatus 51, 52, 53, 54, 55, 56, by e.g. typing a command, typing a value or by turning a knob etc. on a mimic panel of the actual device shown on the display of a user terminal.

The control data is sent 210 to the data communication manager.

The control data may be sent immediately when the user types the command(s) or at predetermined time intervals.

The control data may be stored 220 in the corresponding virtual IOT device in the memory unit of the data communication manager as described in Fig. 2.

The control data may be sent 230 to the IOT device continuously, upon demand from the IOT device, upon demand from the user or at predetermined time intervals.

If, for example, the control data is sent only upon demand from the IOT device, upon demand from the user device or upon predetermined intervals, then the IOT device may be operated in a low power mode while no data transmission is taking place.

The control data may be stored 240 in the memory unit of the IOT device.

The IOT device controls 250 the apparatus in accordance with the control data from the user.

The IOT device may control the apparatus upon demand from the user or at predetermined time intervals.

It may also be possible to send/receive both monitoring and control data at the same time, i.e. when the IOT device is awake or "open".

## Claims

1. A data communication system, comprising:
an apparatus that is to be controlled and/or monitored;
a user terminal (10, 11) that is configured provide control data for the apparatus and/or to receive monitoring data from the apparatus via a data network;
an IOT device (41, 42, 43, 44, 45, 46), which is configured to monitor and/or control the apparatus (51, 52, 53, 54, 55, 56); and
a data communication manager, which is arranged on an apparatus side of the data network, comprising:
a processing unit;
a memory unit;
a first communication unit, configured to communicate with the user terminal over a data network by means of an application protocol together with a network protocol, such as the Internet; and
a second communication unit, configured to communicate wirelessly with the IOT device by means of a wireless protocol,
wherein the memory unit is configured to provide:
a virtual IOT device associating a unique ID of the IOT device with a database comprising data in the form of at least one of control data for the apparatus, monitoring data generated at the apparatus and position data of the apparatus and optionally time stamp data for said data, and
a data protocol database comprising information for importing data from and/or exporting data to at least the application protocol and the wireless protocol;
wherein the processing unit is configured to:
extract data received via one of the application protocol and the wireless protocol,
store the extracted data in the database of the virtual IOT device,
export the stored data to the other of the application protocol and the wireless protcol;
forward the exported data from the database to the IOT device or to the user terminal; and
introduce a delay between storing the data and forwarding the data to the IOT device or to the user terminal, as the case may be.

2. The system as claimed in claim 1, wherein delay is selected from a group consisting of:
a predetermined time period,
a demand received from the user terminal,
a demand received from the IOT device, and
an amount of data accumulated in the virtual IOT device.

3. The system as claimed in claim 1, wherein the IOT device comprises a processing unit, a wireless communication unit, optionally a memory unit, and at least one of a sensor input and/or a control output.

4. The system as claimed in claim 3, wherein the IOT device comprises a power supply unit consisting of at least one battery arranged for supplying power to the IOT device.

5. The system as claimed in any one of the preceding claims,
wherein the IOT device is integrated with the apparatus.

6. The system as claimed in any one of the preceding claims,
wherein the data network is a wide area network, such as the Internet.

7. The system as claimed in any one of the preceding claims,
wherein the IOT device has less than 5 % computational capacity as compared to the data communication manager, preferably less than 3 % computational capacity as compared to the data communication manager, more preferably less than 1 % of the computational capacity as compared to the data communication manager.

8. The system as claimed in any one of the preceding claims,
wherein the application protocol is a building automation and control system protocol, such as M-bus, Modbus, BACnet or HART, a positioning protocol or a health care protocol.

9. The system as claimed in any one of the preceding claims,
wherein the wireless protocol is a protocol for wireless communication, such as ZigBee, 6LoWPAN, wireless M-bus, wireless HART,Bluetooth or any other proprietary protocol.

10. The system as claimed in any one of the preceding claims,
wherein the IOT device are configured to operate at least partially in a low power mode during the delay.

11. The system as claimed in any one of the preceding claims,
wherein the data protocol database comprises translation information relating to at least two different application protocols and/or at least two different wireless protocols.

12. A method of data communication between a user terminal (10, 11) and an IOT device (41, 42, 43, 44, 45, 46) configured to monitor and/or control an apparatus (51, 52, 53, 54, 55, 56), the method comprising:
providing a data communication manager (31, 32) on an apparatus side of a data network (20),
providing a virtual IOT device in the data communication manager, the virtual IOT device associating a unique ID of the IOT device with a database comprising data in the form of at least one of control data for the apparatus, monitoring data generated at the apparatus and position data of the apparatus and optionally time stamp data for said data;
communicating via the data network with the user terminal via an application protocol (60) together with a network protocol, such as the Internet, whereby the ID and control data is received from the user terminal;
identifying the first application protocol;
importing the control data from the application protocol;
storing the control data in the database of the virtual IOT device; and
communicating wirelessly with the IOT device via the wireless protocol (61), whereby the control data is transmitted from the virtual IOT device to the IOT device;
wherein a delay is introduced between storing the control data and communicating wirelessly with the IOT device.

13. A method of data communication between a user terminal (10, 11) and an IOT device (41, 42, 43, 44, 45, 46) configured to monitor and/or control an apparatus (51, 52, 53, 54, 55, 56), the method comprising:
providing a data communication manager (31, 32) on an apparatus side of a data network (20),
providing a virtual IOT device in the data communication manager, the virtual IOT device associating a unique ID of the IOT device with a database comprising data in the form of at least one of control data for the apparatus, monitoring data generated at the apparatus and position data of the apparatus and optionally time stamp data for said data;
communicating wirelessly with the IOT device via a wireless protocol (61), whereby monitoring data and/or position data is received from the IOT device;
identifying the IOT device based on the ID of the IOT device;
importing the monitoring data and/or position data from the wireless protocol;
storing the monitoring data and/or position data in the database of the virtual IOT device associated with the IOT device;
exporting the monitoring data and/or position data stored in the database to an application protocol associated with a user terminal; and
communicating via the data network with the user terminal via the application protocol (60) together with a network protocol, such as the Internet, whereby the monitoring data and/or position data is transmitted from the virtual IOT device to the user terminal;
wherein a delay is introduced between storing monitoring data and/or position data and communicating with the user terminal.
